# EUROPEAN PATENT SPECIFICATION

(11) **EP 4 057 011 B1**
(45) Date of publication and mention of the grant of the patent: **15.04.2026**
(21) Application number: 19957442.7
(22) Date of filing: 26.12.2019
(51) Int. Cl.: G01N 35/10, B01L 3/00

(54) **LIQUID TRANSFER DEVICE AND METHOD, BIOCHEMICAL SUBSTANCE REACTION DEVICE, AND BIOCHEMICAL SUBSTANCE ANALYSIS DEVICE AND METHOD**
VORRICHTUNG UND VERFAHREN ZUR FLÜSSIGKEITSÜBERTRAGUNG, REAKTIONSVORRICHTUNG FÜR BIOCHEMISCHE STOFFE SOWIE VORRICHTUNG UND VERFAHREN ZUR ANALYSE BIOCHEMISCHER STOFFE
DISPOSITIF ET PROCÉDÉ DE TRANSFERT DE LIQUIDES, DISPOSITIF DE RÉACTION DE SUBSTANCES BIOCHIMIQUES ET DISPOSITIF ET PROCÉDÉ D'ANALYSE DE SUBSTANCES BIOCHIMIQUES

(43) Date of publication of application: 14.09.2022
(73) Proprietor: MGI Tech Co., Ltd., Shenzhen, Guangdong 518083 (CN)
(72) Inventor: QIN, Yanzhe, Shenzhen, Guangdong 518083 (CN)
(74) Representative: Zaboliene, Reda
(86) International application number: PCT/CN2019/128883
(87) International publication number: WO 2021/128214

(56) References cited:
- WO-A2-00/15653
- CN-A- 1 944 674
- CN-A- 102 917 795
- CN-A- 108 139 420
- CN-A- 109 856 416
- CN-U- 204 298 409
- JP-A- S5 582 964
- US-A- 3 940 250
- US-A- 4 395 493
- US-A1- 2003 082 820
- US-A1- 2016 018 428
- US-A1- 2018 104 694
- US-A1- 2019 250 183

## Description

### FIELD

The subject matter relates to a field of biochemical reactions, in particular to a liquid transfer method, and a biochemical substance reaction device.

### BACKGROUND

The existing second-generation gene sequencing methods require precise temperature control and fluid control, so the cost is high and the reaction is prone to inhomogeneity. The chemical reagents used in gene sequencing reactions are single-use, and the utilization rate is lower, thus the cost of sequencing is increased, and the throughput is lower. For example, as to the flow cell technology widely used now, a flow cell composed of two planar media, which are attached with biological information and assembled up and down, is used to take multiple rounds of photography, to recognize a base sequence. However, the flow cell technology limits the speed of fluid, since when the flow velocity is too fast, based on Bernoulli principle, an upper plate on the flow cell may be broken by a downward pressure and adsorbed onto a chip, thereby damaging biological information on the chip. Meanwhile, the flow cell technology increases the cost. The sequencing process requires up to 200 times of "reaction-photography" cycles of multiple reagents. A thickness of the liquid on the chip surface during each cycle is a gap between the two planar media. But when the gap is too small, the chip is difficult to assemble. Moreover, the flow cell technology results in wastes of reagents and time. During each cycle, the previous reagent needs to be completely substituted. The existing smaller gap makes the surface acting forces dominate and requires more of the next reagent for flushing to start the reaction. Therefore, the above-described disadvantages make sequencing performance, time, and cost limited. Conventional biochemical substance reaction devices and methods for transferring liquid are known from D1 (US 4395493A), D2 (JP S5582964A), D3 (US 2003/082820A1), D4 (US 2018/104694A1), D5 (US 2016/018428A1), D6 (WO 00/15653A2), and D7 (US 3940250A).

In order to lower cost and improve throughput, the related art additionally provides a method in which a bare chip is grabbed through a mechanical arm and the reaction is performed by dipping reagents in different reagent tanks and using the dipped thin-layer reagents, to reduce reagent consumption and replacement of reagents. The method of dipping reagents has improved throughput and reduced the cost of reagents to a certain extent. However, the following problems and negative factors still exist: the sequencing quality is influenced by cross-contamination of reagents, the chips are dried out due to uneven liquid thickness, and the system is too complicated.

### SUMMARY

In order to solve at least one problem above and/or other potential problems in the related art, a biochemical substance reaction device and a liquid transfer method is necessarily proposed. The invention is set out in the appended set of claims.

In a first aspect, a biochemical substance reaction device according to claim 1 is provided. In a second aspect, a liquid transfer method according to claim 9 is provided.

### BRIEF DESCRIPTION OF THE DRAWINGS

Implementations of the present technology will now be described, by way of embodiment, with reference to the attached figures. Obviously, the drawings are only some embodiments of the present disclosure. For those of ordinary skill in the art, other drawings can be obtained based on these drawings without creative work.
FIG. 1 is a schematic diagram of principles of a liquid transfer device according to an embodiment of the present disclosure.
FIG. 2 is an enumerated case of arranging liquids on a substrate according to a time sequence.
FIG. 3 is a diagrammatic view of a liquid transfer device according to an embodiment of the present disclosure.
FIG. 4 is a schematic diagram showing coating a liquid to the substrate by a die head.
FIG. 5 is a diagrammatic view showing a positional relationship between the liquid transfer device, a sample carrier, and a detection device according to an embodiment of the present disclosure.
FIG. 6 is a diagrammatic view showing a positional relationship between the liquid transfer device, the sample carrier, and the detection device according to another embodiment of the present disclosure.
FIG. 7 and FIG. 8 are schematic diagrams showing a distance between the substrate and the sample carrier.
FIG. 9A and 9B are two schematic diagrams showing an arrangement of a spacer on the sample carrier in different views.
FIG. 10 is a schematic diagram showing an arrangement of a spacer on an object stage.
FIG. 11 and FIG. 12 are schematic diagrams showing an arrangement of an adsorption device to adsorb the substrate.
FIG. 13 is a schematic diagram showing an arrangement of a temperature control device on the object stage.
FIG. 14 is a schematic diagram showing an arrangement of a pushing device on a side, far away from a reaction platform, of the substrate.
FIG. 15 and FIG. 16 are schematic diagrams showing an arrangement of a liquid removal device at a rear end of a movement direction of the substrate to remove the liquid on the substrate.
FIG. 17 is a schematic diagram showing an arrangement of a flattening device at a front end of the movement direction of the substrate to flatten the liquid on the substrate.
FIG. 18 is a schematic diagram of some of components of a liquid transfer device provided in Embodiment 2.
FIG. 19 is a schematic diagram of some of components of a liquid transfer device provided in Embodiment 3.
FIG. 20 is a schematic diagram of some of components of a liquid transfer device provided in Embodiment 4.
FIG. 21 is a schematic diagram of a composition of a printing device in the liquid transfer device shown in FIG. 20.
FIG. 22 is a schematic diagram of some of components of a liquid transfer device provided in Embodiment 5.
FIG. 23 is a schematic diagram of a biochemical substance reaction device provided in Embodiment 6.
FIG. 24 is a schematic diagram of a biochemical substance analysis device provided in Embodiment 7.
FIG. 25 is a schematic diagram of a biochemical substance analysis device provided in Embodiment 8.
FIG. 26 is a flow diagram of a liquid transfer method provided in Embodiment 9.
FIG. 27 is a flow diagram of a biochemical substance analysis method provided in Embodiment 10.

Implementations of the disclosure will now be described, by way of embodiments only, with reference to the drawings.

### DETAILED DESCRIPTION

Implementations of the disclosure will now be described, by way of embodiments only, with reference to the drawings. The described embodiments are only portions of the embodiments of the present disclosure, rather than all the embodiments. The disclosure is illustrative only, and changes may be made in the detail within the principles of the present disclosure. It will, therefore, be appreciated that the embodiments may be modified within the scope of the claims.

It should be noted that when a component is referred to as being "fixed to" or "mounted on" another component, the component can be directly in contact with another component or a middle component may exist therebetween. When a component is considered to be "arranged on" another component, the component can be directly on another component or a middle component may exist therebetween. The term "and/or" as used herein means any combinations of one or more related listed items.

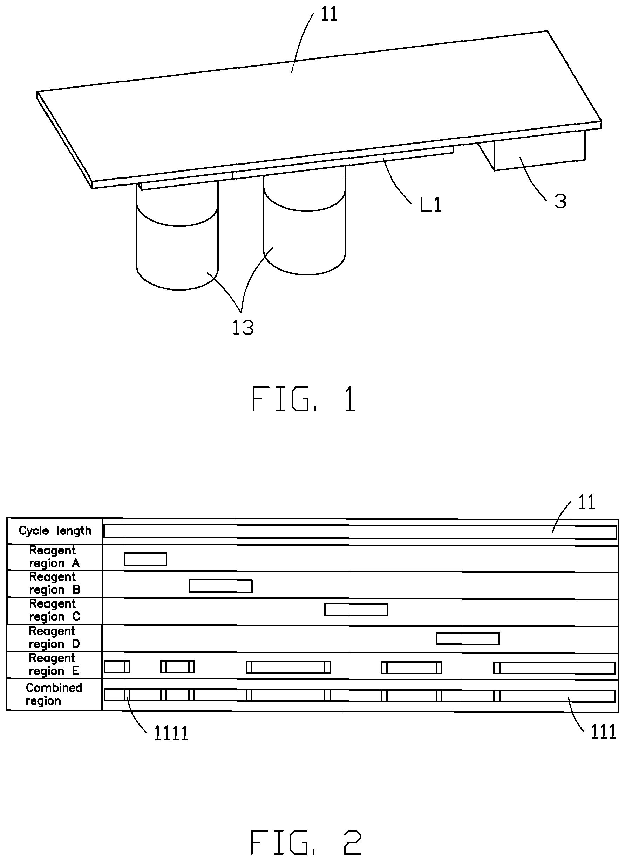

FIG. 1 is a schematic diagram of principles of implementing a liquid transfer method by a liquid transfer device 1 in the present disclosure. The liquid transfer device 1 includes a substrate 11. The substrate 11 is controlled to pass over a reaction platform 3 at a certain speed, to load the reaction platform 3 with a new liquid and/or take away an original liquid on the reaction platform 3. Further, the substrate 11 may be a substrate that does not carry liquid or a substrate that carries liquid. By using the substrate 11 that does not carry liquid or a region of the substrate 11 that does not carry liquid to pass over the reaction platform 3, the original liquid on the reaction platform 3 may be wiped off through controlling a relative speed between the substrate 11 and the reaction platform 3. While by using the substrate 11 that carries liquid or a region of the substrate 11 that carries liquid to pass over the reaction platform 3, and through controlling the relative speed between the substrate 11 and the reaction platform 3, firstly, the original liquid (if any) on the reaction platform 3 may be wiped off; and secondly, a new liquid is loaded onto the reaction platform 3, such that the next round of reaction may start on the reaction platform 3.

By controlling two opposite planes (such as the substrate 11 and the reaction platform 3) to generate a relative movement, a moving plane (such as the substrate 11) enables the liquid sandwiched between the two planes to obtain a certain speed. The speed is related to an interaction force between the moving plane (such as the substrate 11) and the liquid, an interaction force between a fixed plane (such as the reaction platform 3) and the liquid, a thickness of the liquid layer, and the viscosity of the liquid. For related theories, please refer to the research on "Couette flow" in the related art. Therefore, after the substrate 11 is controlled to move on the reaction platform 3 for a certain time or a certain length of distance, the liquid on the reaction platform 3 will be taken away by the substrate 11 or replaced by the liquid carried by the substrate 11.

The liquid transfer device 1 may further include a liquid arrangement device 13. The liquid arrangement device 13 arranges a liquid (defined as "L1") on the substrate 11 by means of coating or spraying. When multiple liquids "L1" need to be arranged, the liquid arrangement device 13 may employ multiple liquid outlet mechanisms. The multiple liquid outlet mechanisms are controlled to output different liquids "L1" in a preset time sequence. Each liquid "L1" is controlled to be arranged on the substrate 11 for a certain length as required (e.g., according to the length of reaction time with a sample on the reaction platform 3). When multiple liquids "L1" need to be arranged, the liquid arrangement device 13 may also employ one liquid outlet mechanism. The liquid outlet mechanism is controlled to output different liquids "L1" in a preset time sequence, and each liquid "L1" is controlled to be arranged on the substrate 11 for a certain length as required.

Referring to FIG. 2, FIG. 2 enumerates a case of arranging multiple liquids on the substrate 11 according to a time sequence. In the case, the multiple liquids include reaction reagents (defined as "A", "B", "C", and "D") and a buffer reagent (defined as "E"), within a cycle, the multiple liquids are arranged on the substrate 11 in an order of the reaction reagent "A", the buffer reagent "E", the reaction reagent "B", the buffer reagent "E", the reaction reagent "C", the buffer reagent "E", the reaction reagent "D", and the buffer reagent "E". The buffer reagent "E" is used to clean the previous reaction reagent. The buffer reagent "E" is partially overlapped with the adjacent reaction reagents, i.e., a head of each segment of the buffer reagent "E" is overlapped with a tail of the previous reaction reagent, and a head of the latter reaction reagent is overlapped with a tail of the buffer reagent "E", such that reagents with different surface tensions on the substrate 11 may be connected to reduce the effect of surface tension when the substrate 11 brings different liquids onto the reaction platform 3 and avoid the introduction of air bubbles. After arranging the reaction reagents "A", "B", "C", and "D" and the buffer reagent "E" on the substrate 11 according to a preset time sequence, a reagent segment 111 of a reaction cycle is formed on the substrate 11. The region referred to by the reference numeral 1111 in the reagent segment 111 is the region in which the buffer reagent E is overlapped with the reaction reagent.

### Embodiment 1

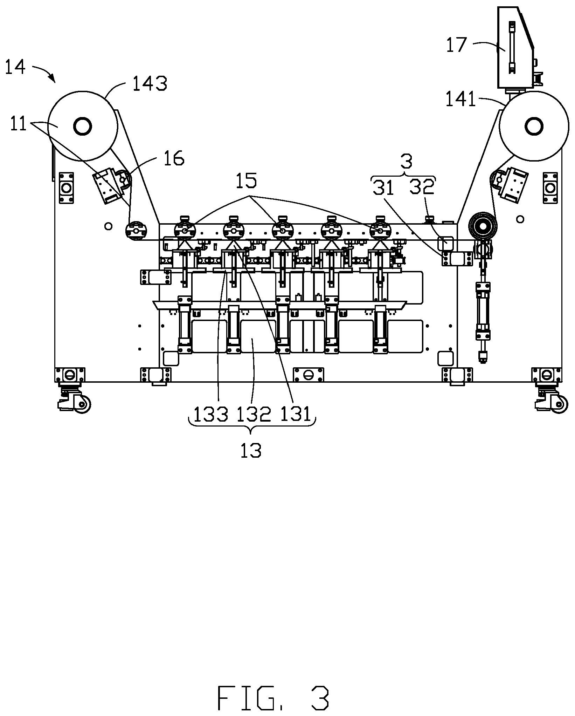

Referring to FIG. 3, which is a diagrammatic view of the liquid transfer device 1 in Embodiment 1. In addition to the substrate 11 and the liquid arrangement device 13, the liquid transfer device 1 further includes a driving device 14, a tensioning device 15, a guiding device 16, and a control device 17. The driving device 14 is configured to drive the substrate 11 to move at a certain speed. In the embodiment, the driving device 14 includes a winding device 141 and an unwinding device 143 which are spaced apart. Two ends of the substrate 11 are respectively wound on the winding device 141 and the unwinding device 143, and the winding device 141 rotates to pull the substrate 11 to move at a certain speed. The tensioning device 15 is arranged on a movement path of the substrate 11 to tension the substrate 11, such that the liquid is conveniently arranged on the substrate 11, and the arrangement uniformity of the liquid is improved. The guiding device 16 is used to guide the substrate 11 to move along a preset movement path, and when the preset movement path of the substrate 11 is a straight-line distance between the unwinding device 143 and the winding device 141, the guiding device 16 may be omitted. In the embodiment, the guiding device 16 is a guiding wheel. In the embodiment, the liquid outlet mechanism of the liquid arrangement device 13 adopts a die head 131. According to a type of liquid to be arranged, the liquid arrangement device 13 includes multiple die heads 131. The multiple die heads 131 are distributed along the movement path of the substrate 11. Each die head 131 is connected with a liquid storage device 132 which stores certain liquid, and is controlled to output a certain amount of the liquid. In the embodiment, the liquid arrangement device 13 includes five die heads 131 and five liquid storage devices 132. The five liquid storage devices 132 are respectively used to store the reaction reagents "A", "B", "C", and "D" and the buffer reagent "E". The five die heads 131 are respectively used to output the reagents "A" to "E", as to the time sequence in which the five die heads 131 output the reagents "A" to "E", please refer to FIG. 2, and finally multiple reagent segments 111 are formed on the substrate 11. Each reagent segment 111 passing through the reaction platform 3 represents the completion of a round of reaction with the sample on the reaction platform 3, such as gene sequencing. Each reagent segment 111 passing through the reaction platform 3 represents the completion of a reaction for determining adenine, guanine, thymine, and cytosine by a DNA node with the sample on the reaction platform 3.

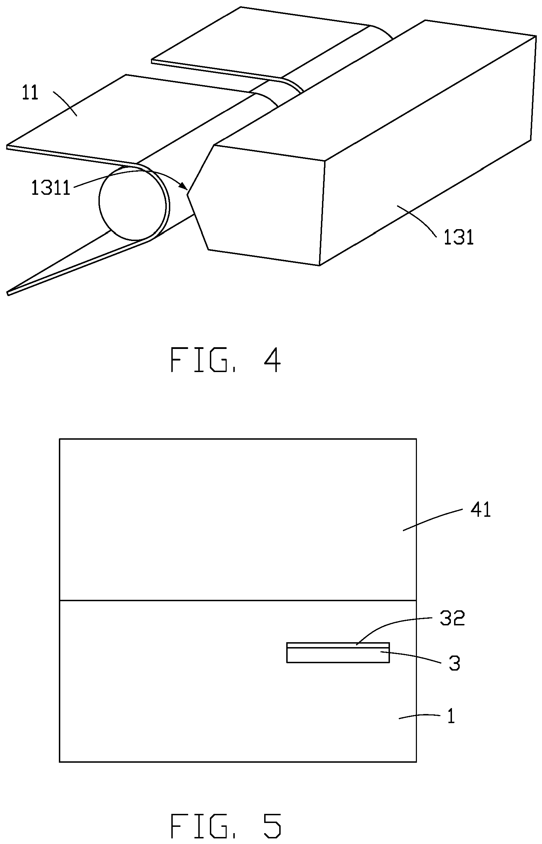

Referring to FIG. 4, which is a schematic diagram of coating the liquid to the substrate 11 by the die head 131. The die head 131 is provided with a gap 1311 for fluid discharge, and the gap 1311 is just opposite to the substrate 11. The liquid arrangement device 13 further includes a valve device 133. The valve device 133 may be an electromagnetic valve or other types of devices that control the flow and disconnection of fluid. The valve device 133 controls liquid flowing to the die head 131 under the control of the control device 17. The control device 17 activates the valve device 133 associated with the die head 131 according to a preset time sequence when the die head 131 is required to coat liquid to the substrate 11 according to a preset time sequence. Liquid flows out to the die head 131 from the corresponding liquid storage device 132, and flows out from the gap 1311 of the die head 131, and along with the movement of the substrate 11 and continuous supply of the liquid in the die head 131, the liquid is uniformly spread on the substrate 11 by overcoming an intermolecular force of the liquid. Further, the liquid arrangement device 13 may further include a fluid power module (not shown). The fluid power module may be a power device such as a pump which may provide power for the fluid to enter the die head 131 and to be coated from the die head 131 to the substrate 11. The power provided by the fluid power module may help to overcome the intermolecular force existing when the liquid forms a thin layer on the substrate 11, such that the liquid may be spread uniformly on the substrate 11 without defects or with few defects (e.g., pinhole defects).

It may be understood that, by using the control device 17 to control each valve device 133 and the fluid power module of the liquid arrangement device 13, the paved length and thickness of different liquids and the spacing of different liquids may be adjusted as required. Preferably, to avoid the introduction of air bubbles and to avoid larger changes in the surface tension of the liquid on the reaction platform 3, which may destroy the information of the sample on the reaction platform 3, zero spacing may be set between different liquids. Or, as shown in FIG. 2, the buffer reagents "E" are employed to connect different reaction reagents "A" to "D", and the head and tail ends of the buffer reagents "E" are overlapped with the front and rear of the reaction reagents "A" to "D".

In the embodiment, a material of the substrate 11 includes corona polyethylene terephthalate film (PET film for short), polystyrene film (PS film for short), polyethylene film (PE film for short), or other materials that have hydrophilic and hydrophobic properties and match with the liquid arranged on the substrate 11. If the liquid to be arranged on the substrate 11 is an aqueous coating, the substrate 11 is made of a hydrophilic material. If the liquid to be arranged on the substrate 11 is an oil paint, the substrate 11 is made of a lipophilic material to facilitate uniform spreading of the liquid on the substrate 11. In an embodiment, the substrate 11 may be made of a transparent material. As shown in FIG. 5, a detection device 41 is arranged above the reaction platform 3 and the substrate 11 passes between the detection device 41 and the reaction platform 3. The substrate 11 adopts the transparent material, to facilitate the inspection of the sample on the reaction platform 3 by the detection device 41 through the substrate 11, so as to obtain biological feature information of the sample.

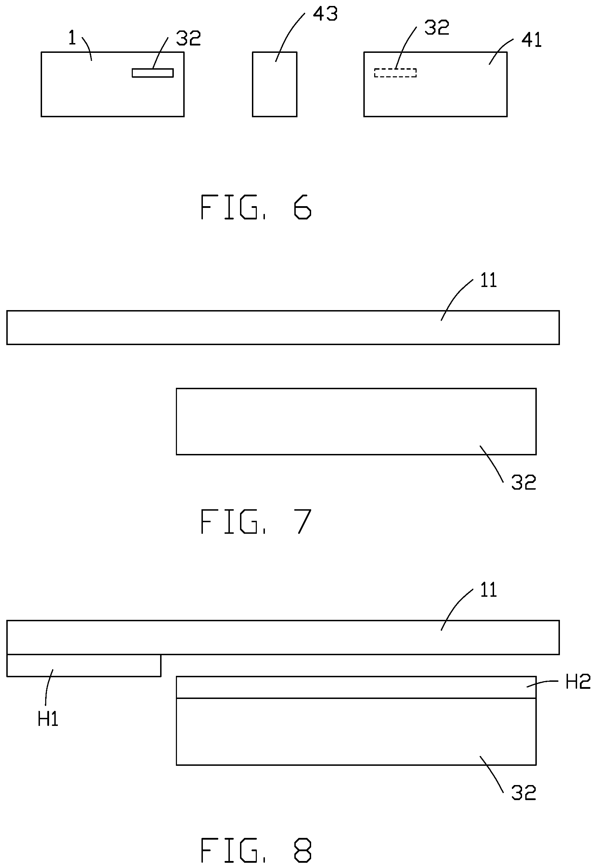

In another embodiment, the substrate 11 may also be made of other non-transparent or translucent materials. As shown in FIG. 6, at this time, the detection device 41 is located elsewhere. A sample carrier 32 on the reaction platform 3 is transferred between the reaction platform 3 and the detection device 41 by a transfer device 43 (e.g., a mechanical arm). Thus, the sample on the sample carrier 32 reacts on the reaction platform 3 and is detected at the detection device 41, so as to obtain biological feature information of the sample.

In still another embodiment, multiple sample carriers 32 may share a common reaction platform 3. When one sample carrier 32 is transferred to the detection device 41 for detection, another sample carrier 32 may be transferred to the reaction platform 3. Under the control of the control device 17, the substrate 11 is used to displace the liquid on the sample carrier 32 transferred to the reaction platform 3, thereby leading to a new round of reaction of the sample in the other sample carrier 32.

Referring to FIG. 3, the reaction platform 3 includes an object stage 31 and the sample carrier 32 arranged on the object stage 31. The sample carrier 32 may be a biochip. The reaction platform 3 is arranged beside the path by which the substrate 11 passes and is arranged at a distance from the substrate 11. Referring to FIGS. 7 and 8, a distance between the substrate 11 and the sample carrier 32 is greater than zero but less than a sum of a thickness of a liquid layer (defined as "H1") on the substrate 11 and a thickness of a liquid layer (defined as "H2") on the sample carrier 32. The distance between the substrate 11 and the sample carrier 32 is set, such that the substrate 11 does not contact with the sample carrying information on the sample carrier 32 when taking away the liquid on the sample carrier 32, to avoid damage to the sample information, and at the same time, the liquid carried on the substrate 11 may also be mixed with the liquid on the sample carrier 32, to form intermolecular forces to facilitate the substrate 11 to take away the liquid on the sample carrier 32.

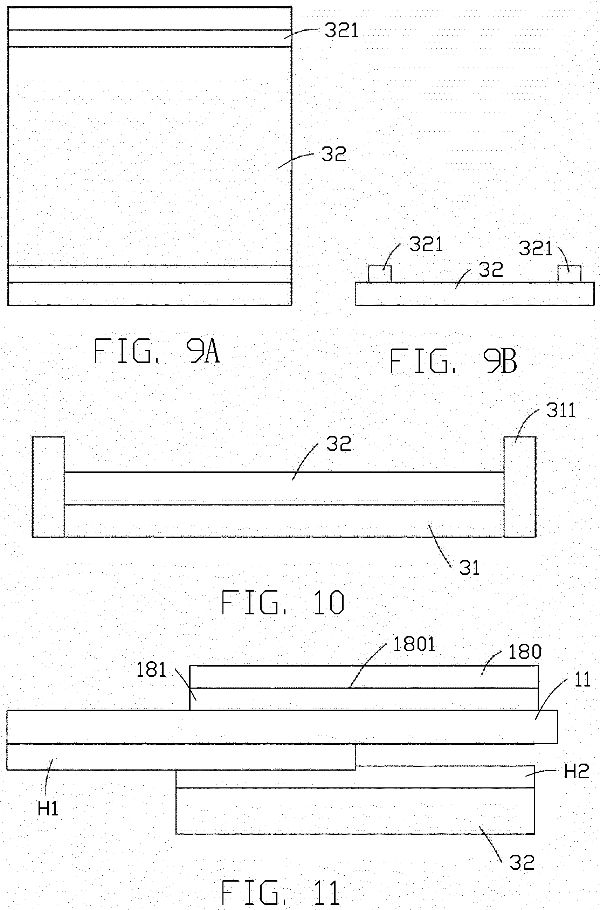

Referring to FIG. 9, in one embodiment, through arranging at least one spacer 321 facing towards the substrate 11 above the sample carrier 32 and using the spacer 321 to separate the substrate 11 from the sample carrier 32, the distance between the substrate 11 and the sample carrier 32 satisfies the distance requirement shown in FIG. 3. Specifically, in the embodiment, spacers 321 are arranged at two opposite ends of the sample carrier 32. Each spacer 321 is formed by applying glue or photoresist to the sample carrier 32. The glue may be mixed with particles with known diameters to control the spacers 321 to a preset height. When the glue is pressed, a force sensor may be designed to determine a time to stop pressing.

Referring to FIG. 10, in another embodiment, through arranging at least one spacer 311 facing towards the substrate 11 above the object stage 31 and using the spacer 311 arranged on the object stage 31 to separate the substrate 11 from the sample carrier 32, the distance between the substrate 11 and the sample carrier 32 satisfies the distance requirement shown in FIG. 3. Specifically, in the embodiment, spacers 311 are respectively arranged at two opposite ends of the object stage 31. Each spacer 311 is formed by gluing or installing spacing bars.

The spacers 311/321 are adopted not only to facilitate the maintenance of a preset distance between the substrate 11 and the sample carrier 32, but also to provide a sealing-like effect for the reaction of the sample with the liquid on the reaction platform 3, thereby reducing the evaporation of liquid and facilitating the stabilization of the temperature required for the reaction of the sample with the liquid.

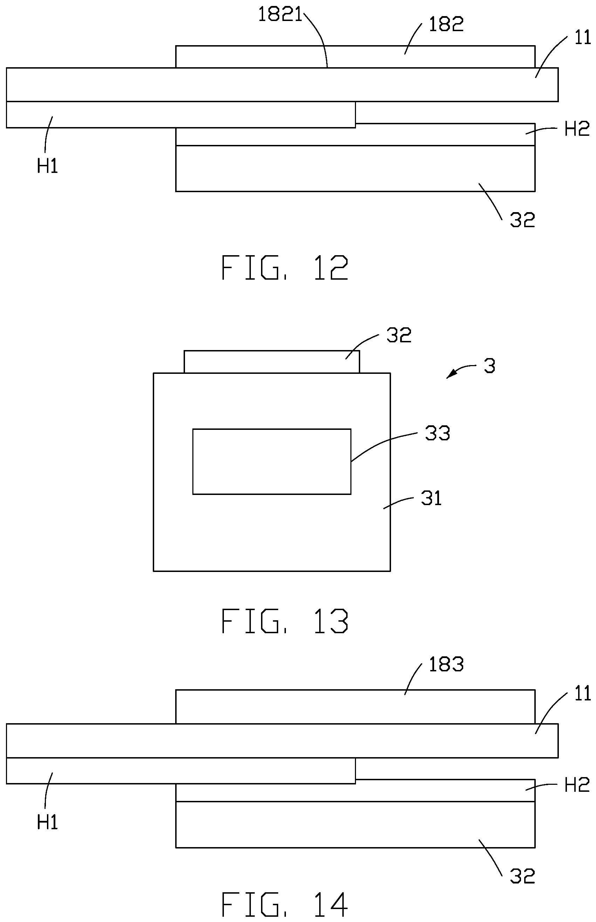

In some embodiments, the substrate 11 may also be prevented from bending and contacting with the sample carrier 32 during the movement by applying a force away from the reaction platform 3 to the substrate 11. Referring to FIGS. 11 and 12, in one embodiment, an adsorption device is disposed on an upper side, far away from the reaction platform 3, of the substrate 11. The adsorption device is used to adsorb the substrate 11 negatively, to prevent the substrate 11 from bending and contacting with the sample carrier 32. The adsorption device may be an object plane 180 as shown in FIG. 11. The object plane 180 is coated with a liquid layer 181, and the liquid layer 181 adheres the substrate 11 to the object plane 180. A surface 1801 at which the object plane 180 is in contact with the substrate 11 is in parallel with the movement direction of the substrate 11. The adsorption device may also be a vacuum adsorption device 182 as shown in FIG. 12, and a surface 1821 at which the vacuum adsorption device 182 is in contact with the substrate 11 is in parallel with the movement direction of the substrate 11.

Referring to FIG. 3, the liquid arrangement device 13 includes the liquid storage device 132. The liquid storage device 132 may be a temperature-controlled memory. The temperature-controlled memory is controlled by the control device 17 to maintain the required temperature according to the temperature required for the reaction of the stored liquid.

In another embodiment, the liquid storage device 132 is a non-temperature-controlled memory. At this time, for the liquid that has requirements on the reaction temperature, the liquid will be heated or cooled to a suitable temperature from the time when the liquid flows out from the liquid storage device 132 until the liquid is arranged on the substrate 11. For example, a temperature control device (not shown) is additionally arranged within the liquid arrangement device 13, such that the liquid has been heated or cooled to a suitable temperature when the liquid flows out to the substrate 11.

In a third embodiment, as shown in FIG. 13, a temperature control device 33 may be disposed on the reaction platform 3. The temperature control device 33 is controlled by the control device 17 to heat or cool the liquid and the sample according to a preset time sequence, such that the liquid on the reaction platform 3 reacts with the sample at a suitable temperature each time. The heating/cooling may be by means of a semiconductor cooler (TEC) or other means of rapid temperature rise and fall.

To avoid losing liquid by heating and having an influence on the sample reaction, e.g., when the temperature control device 33 is disposed on the reaction platform 3 to heat the liquid, in one embodiment, the length of some liquids arranged on the substrate 11 is appropriately extended according to the temperature required for the reaction. After the substrate 11 moves to displace the liquid on the reaction platform 3 with a new liquid, the control device 17 still controls a slow movement of the substrate 11 to continuously provide the new liquid to the reaction platform 3, so as to replenish the liquid lost during heating or to prevent drying. In another embodiment, the reaction platform 3 may be arranged as a movable platform that may be moved away from and adjacent to the substrate 11. When the liquid is heated for reaction, the control device 17 controls the reaction platform 3 to be adjacent to the substrate 11 by a certain distance, then the substrate 11 and the sample carrier 32 directly form a sealing-like effect to prevent evaporation of the liquid during the reaction. Similarly, in still another embodiment, referring to FIG. 14, a pushing device 183 may be disposed above the substrate 11 away from the reaction platform 3. The pushing device 183 moves downwards for a certain distance under the control of the control device 17, to push the substrate 11 to be adjacent to the reaction platform 3 by a certain distance, such that the substrate 11 and the sample carrier 32 directly form a sealing-like effect to prevent evaporation of the liquid in the reaction. Therefore, according to the temperature required by the liquid participating in the reaction, the control device 17 determines whether to activate the pushing device 183 to push down the substrate 11 or determines whether to move up the reaction platform 3.

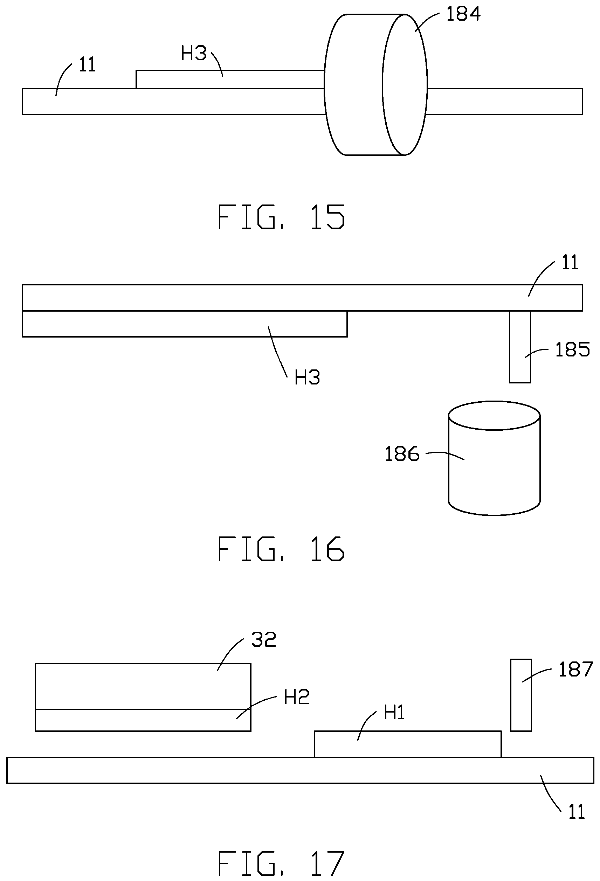

In the embodiment, a liquid removal device is further disposed at the rear end of the movement path of the substrate 11. In one embodiment, referring to FIG. 15, the liquid removal device is a dryer 184. The substrate 11 passes through the reaction platform 3 and then passes through the dryer 184, and the dryer 184 is turned on to dry the residual liquid (defined as "H3") on the substrate 11. In another embodiment, referring to FIG. 16, the liquid removal device is a scraper 185. A top of the scraper 185 is in contact with the substrate 11 and scrapes the residual liquid "H3" on the substrate 11, and the scraped liquid drips down into a waste bin 186 arranged below the scraper 185. In still another embodiment, both the scraper 185 and the dryer 184 may be arranged. The liquid not scraped by the scraper 185 is then dried by the dryer 184, or the liquid not dried by the dryer 184 is then scraped by the scraper 185. In this way, by removing the residual liquid, contamination and corrosion on the device and components in contact with the liquid caused by the residual liquid may be avoided.

In one embodiment, referring to FIG. 17. a flattening device 187 may be further disposed at the front end of the movement path of the substrate 11. After the liquid is arranged on the substrate 11 and before the liquid is transferred onto the sample carrier 32, the liquid is flattened by the flattening device 187. In an embodiment, the flattening device 187 is a scraper.

In some embodiments, the efficiency of the removal/displacement of liquid on the reaction platform 3 by the substrate 11 may also be enhanced by some auxiliary means. For example, the liquid between the substrate 11 and the sample carrier 32 may be driven by using acoustic waves, laser, or magnetism. For example, an acceleration device (not shown) such as an acoustic, laser, or magnetic acceleration device may be disposed above the substrate 11 and/or below the sample carrier 32, to accelerate the efficiency of the removal/displacement of liquid on the reaction platform 3 by the substrate 11.

The control device 17 controls the driving device 14 to control the start/stop and movement speed of the substrate 11, controls the tensioning device 15 to match with the liquid arrangement on each section of the substrate 11, and controls the arrangement of the liquid on the substrate 11 by the liquid arrangement device 13 and the amount of the arranged liquid (thickness and length) according to a preset time sequence. In the embodiment, the thickness of the liquid arranged on the substrate 11 is below 200 microns, to avoid dripping off of the liquid when the liquid is too thick or avoid the requirement of an overlong substrate 11 to take away the liquid of the last stage and to displace the liquid of the next stage when the liquid is too thin. Further, when a temperature-controlled memory is adopted, the control device 17 controls the temperature of the temperature-controlled memory according to the temperature required by each liquid during the reaction. When a temperature control device is adopted, the control device 17 controls the temperature control device to heat or cool the liquid to a suitable temperature according to the temperature required by each liquid during the reaction and in combination with a preset time sequence. When multiple sample carriers 32 share the reaction platform 3, the arrangement of the liquid on the substrate 11, the liquid reaction of each sample carrier 32 and the transfer and detection of each sample carrier 32 are controlled according to each sample carrier 32 and the preset time sequence. When the substrate 11 or the reaction platform 3 may be adjacent to or far away from each other, the control device 17 controls the substrate 11 to be adjacent to or far away from the reaction platform 3 according to the liquid participating in the reaction. When a device for enhancing efficiency of liquid transfer/displacement is arranged, the start/stop and even the output power of the device are controlled. In summary, the control device 17 may control the components which need to be controlled and the operation rules as required.

It may be appreciated that the control device 17 may also be cut into multiple sub-control devices (not shown). Each sub-control device is used to implement a part of all the controls. The sub-control devices may communicate with each other to facilitate cooperative operation.

In the embodiment, under the control of the control device 17, the substrate 11 is driven by the driving device 14 to move towards one direction. When the substrate 11 passes through the die head 131, the die head 131 covers part or all of the area of the substrate 11 in a width direction with one or more liquids in the liquid storage device 132 at a certain length and thickness. When the substrate 11 passes over the reaction platform 3 in parallel at a certain speed or a combination of speeds at a certain height, the liquid covered on the substrate 11 is in contact with the sample carrier 32. The substrate 11 moves continuously, and the fresh liquid or other types of liquids continue to contact with the sample carrier 32, to replace the original liquid, such that the reaction continues (the fresh liquid and the original liquid are the same liquid, and it is the supplementary liquid in this case) or other reactions occur (the fresh liquid and the original liquid are not the same liquid). After the scheduled reaction is completed, the sample carrier 32 is detected in situ (i.e., detection is performed at the reaction platform 3), or the sample carrier 32 is transferred to the detection device 41 for detection. When a movable substrate 11 is adopted to displace liquid for the sample carrier 32, extremely-thin liquid (i.e., reagent) may be coated, thereby greatly saving the liquid and improving the utilization rate of the liquid. In addition, the liquid is replaced faster, and since a coiled material may be adopted for the substrate and no installation is required, the throughput of biological property determination is greatly improved. In addition, through adsorbing the substrate 11 negatively and/or adopting the spacer 311/321 to separate the substrate 11 from the sample carrier 32, damage to the sample carrier 32 is avoided, and since the substrate 11 is not brittle glass, an upper plate of the flow cell will not be broken when the speed of arranging fluid to the substrate 11 is improved, thereby avoiding damage to the sample. Meanwhile, through adjusting the time sequence, multiple sample carriers 32 may share the liquid transfer device 1. The detection and reaction time of different sample carriers 32 may be overlapped, thereby further saving time and cost, and improving the overall performance of the device. Moreover, other components of the liquid transfer device 1 in contact with the liquid may adopt such materials as titanium, hastelloy, or polymer materials, to prevent the contact components from rusting or dissolving in the liquid caused by the liquid and electrolyte.

### Embodiment 2

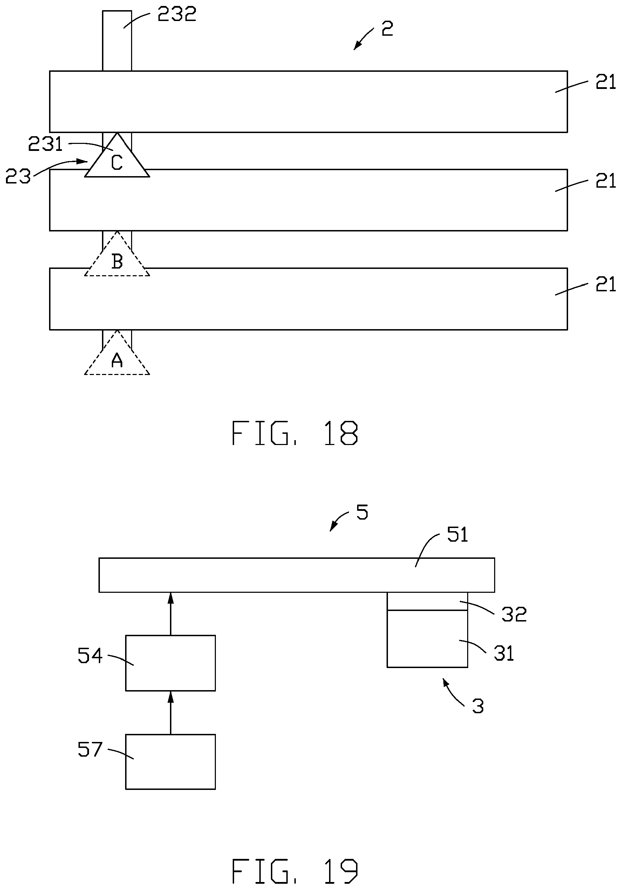

Referring to FIG. 18, which is a schematic diagram of some of components of a liquid transfer device 2 provided in Embodiment 2. The liquid transfer device 2 includes multiple substrates 21. The multiple substrates 21 share a liquid arrangement device 23. A die head 231 of the liquid arrangement device 23 is disposed on a guide rail 232 and moves among the multiple substrates 21 along the guide rail 232, to arrange the liquid for each substrate 21 according to a preset time sequence. In the embodiment shown in FIG. 18, the die head 231 may move among a first position "A", a second position "B", and a third position "C", to arrange the liquid to the substrates 21. For the setting of the other parts of the liquid transfer device 2, the functions and beneficial effects achieved by the liquid transfer device 2, please refer to the liquid transfer device 1, which may not be repeated herein.

### Embodiment 3

Referring to FIG. 19, a liquid transfer device 5 in Embodiment 3 includes a substrate 51, a driving device 54, and a control device 57. Under the control of the control device 57, the substrate 51 is driven by the driving device 54 to move towards one direction, and the substrate 51 is driven to pass over the reaction platform 3, to take away the liquid on the sample carrier 32. In the embodiment, the control device 57 or other control devices may control a transfer device (not shown) to place different sample carriers 32 on the object stage 31, and the substrate 51 is utilized to take away the liquid on different sample carriers 32. While for each sample carrier 32, a die head (not shown) or other similar liquid arrangement devices such as an inkjet head may be utilized in advance to arrange a certain amount of liquid on the surface of the sample carrier 32. After the liquid on the sample carrier 32 is taken away by using the substrate 51, the sample carrier 32 is detected in situ, or the sample carrier 32 is transferred to a detection device (not shown) by a transfer device for detection.

In the embodiment, for the arrangement of each component in the liquid transfer device 5 and the arrangement of the reaction platform 3, please refer to Embodiment 1.

In other embodiments, the liquid transfer device 5 may further include a liquid arrangement device (not shown). Buffer or some reaction reagents are coated onto the substrate 51 by using the liquid arrangement device.

Compared with Embodiment 1, in Embodiment 3, at least part of the liquid is directly arranged on the sample carrier 32, rather than being completely carried by the substrate 51 onto the sample carrier 32 through the substrate 51. In this way, one substrate 51 may be responsible for removal of liquid on multiple sample carriers 32.

### Embodiment 4

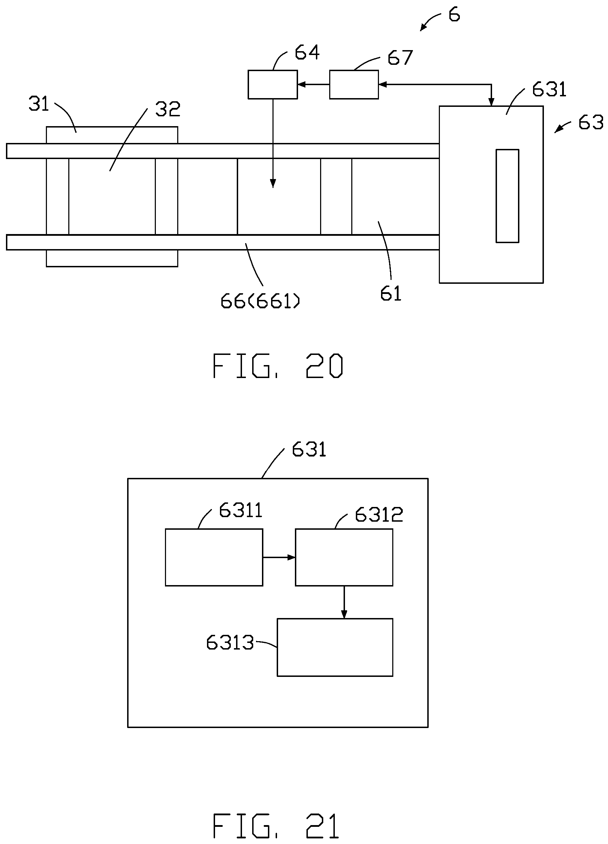

As shown in FIG. 20, In the embodiment, a liquid transfer device 6 includes a substrate 61, a liquid arrangement device 63, a driving device 64, a guiding device 66, and a control device 67. The liquid arrangement device 63 is a printing device 631. The printing device 631 is similar to the existing printers, and the main difference lies in that the printing device 631 does not have a drying function. The printing device 631 prints different liquids onto the surface of the substrate 61 by means of electrostatic adsorption or magnetic adsorption. Referring to FIG. 21 simultaneously, the printing device 631 may be provided with a storage device 6311 and a control device 6312. Control parameters controlling a preset time sequence for printing liquids may be stored in the storage device 6311 in advance, and the control device 6312 reads the control parameters from the storage device 6311 in the printing process, to control a printing apparatus 6313 to print liquids. In other embodiments, the control device 6312 may communicate with the control device 67 through a communication device (not shown), to be controlled by the control device 67 in real time. The liquid transfer device 6 further includes the driving device 64 and the guiding device 66. In the embodiment, the guiding device 66 is a guide rail 661. The driving device 64 drives the substrate 61 to move along a guide rail 661, and the control device 67 synchronizes the driving device 64 and the printing device 631.

In the embodiment, for other setting of the liquid transfer device 6 and mutual position with the reaction platform 3, please refer to Embodiment 1, which will not be repeated redundantly herein.

### Embodiment 5

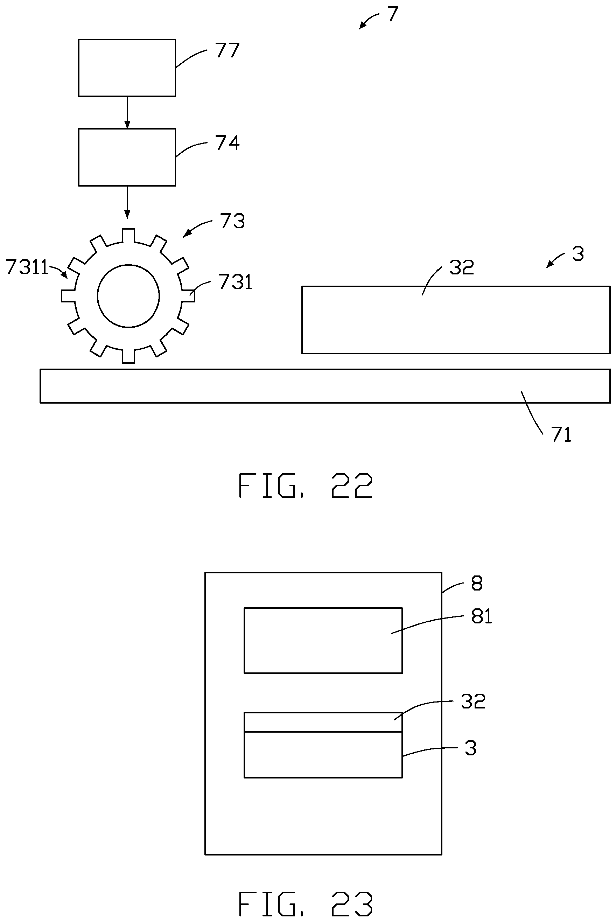

Referring to FIG. 22, in the embodiment, a liquid transfer device 7 includes a substrate 71, a liquid arrangement device 73, a driving device 74, and a control device 77. The liquid arrangement device 73 is an anilox roller 731. The anilox roller 731 is driven by the driving device 74 controlled by the control device 77 to arrange the liquid on the substrate 71. The anilox roller 731 is provided with multiple prefabricated patterns 7311. The liquid which needs to be arranged on the substrate 71 is arranged in the prefabricated pattern 7311 in advance. The driving device 74 is controlled by the control device 77 to drive the substrate 71 to move towards one direction, to pass through the reaction platform 3 and transfer the liquid on the substrate 71 to the sample carrier 32 of the reaction platform 3, and promote the reaction of the sample on the sample carrier 32. In other embodiments, the liquid arrangement device 73 may be a screen-printing device, and the liquid is coated on the substrate 71 by means of screen printing.

### Embodiment 6

Embodiment 6 provides a biochemical substance reaction device 8. Referring to FIG. 23, the biochemical substance reaction device 8 includes a liquid transfer device 81 and a reaction platform 3. The liquid transfer device 81 is used to transfer liquid with the sample carrier 32 of the reaction platform 3. The liquid transfer includes a transfer of liquid on the moving substrate to the sample carrier 32 and/or another transfer of liquid on the sample carrier 32 to the moving substrate. The liquid transfer device 81 may be the liquid transfer device as described in any of the above embodiments.

### Embodiment 7

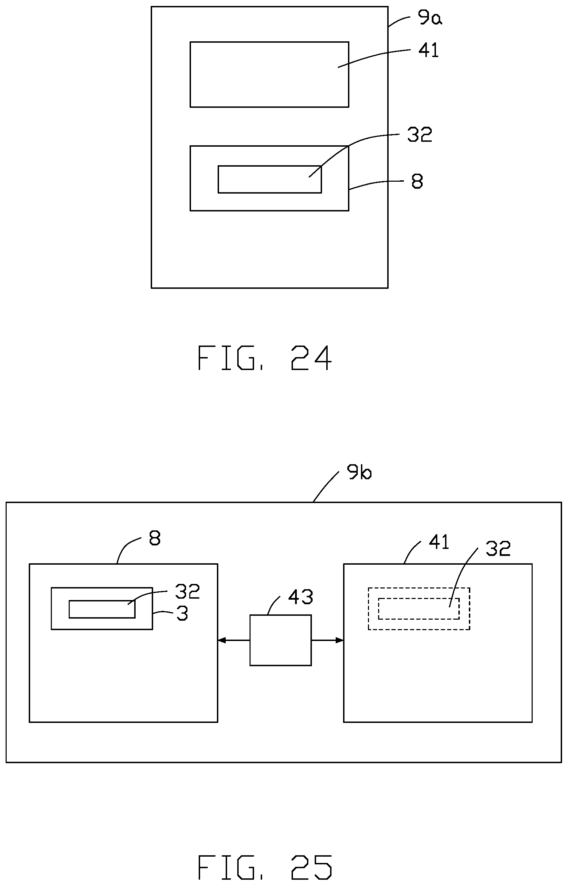

Embodiment 7 provides a biochemical substance analysis device 9a. Referring to FIG. 24, the biochemical substance analysis device 9a includes the biochemical substance reaction device 8 of Embodiment 6 and the detection device 41. The detection device 41 is used to perform signal detection on the sample on the sample carrier 32, to obtain biological feature information of the sample.

### Embodiment 8

Referring to FIG. 25, as compared with Embodiment 7, the biochemical substance analysis device 9b provided in Embodiment 8 further includes a transfer device 43. The transfer device 43 is used to transfer the sample carrier 32 on the reaction platform 3 between the reaction platform 3 and the detection device 41, such that the sample on the sample carrier 32 reacts on the reaction platform 3 and performs signal detection on the detection device 41.

### Embodiment 9

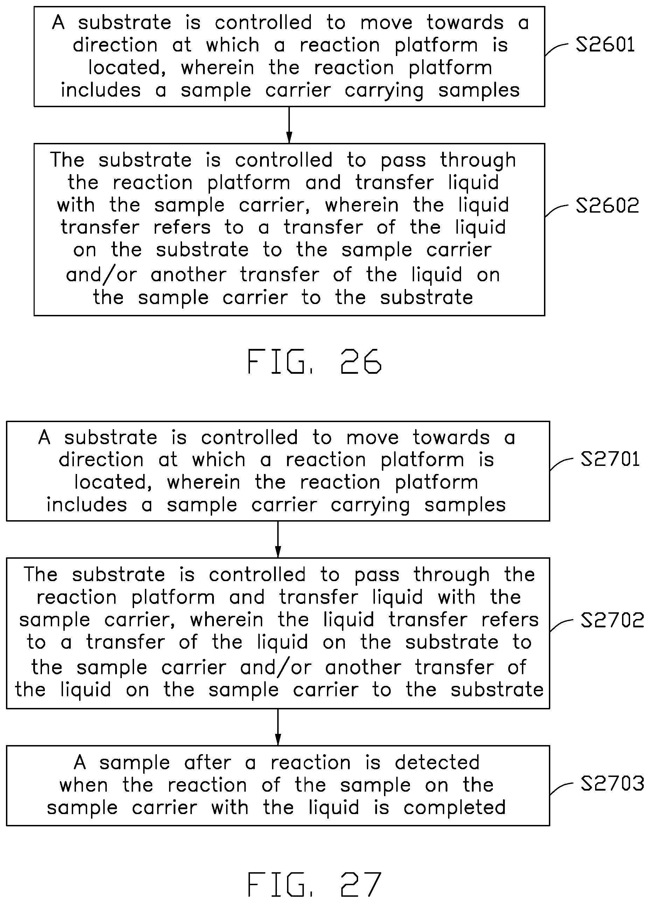

Embodiment 9 provides a liquid transfer method, and the liquid transfer method may be implemented through the liquid transfer device in the above embodiments. Referring to FIG. 26, the liquid transfer method includes:
Step 2601, a substrate is controlled to move towards a direction at which a reaction platform is located. The reaction platform includes a sample carrier carrying samples.
Step 2602, the substrate is controlled to pass through the reaction platform. A liquid is transferred between the moving substrate and the sample carrier. The liquid transfer refers to a transfer of the liquid on the substrate to the sample carrier and/or another transfer of the liquid on the sample carrier to the substrate.

Further, in other embodiments, the liquid transfer method may further include the following step:
A liquid is disposed on the substrate. Or, a liquid is disposed on the moving substrate. The liquid is used for the above liquid transfer between the substrate and the sample carrier. The method of arranging the liquid is coating, printing, or spraying.

Further, in other embodiments, the arrangement of liquid on the substrate includes the arrangement of multiple liquids on the substrate according to a preset time sequence. Multiple liquids are connected end to end. Specifically, the multiple liquids include a buffer reagent and two or more reaction reagents. Two of the reaction reagents distributed in front and back of the substrate are connected by the buffer reagent. Or, further, a head end and a tail end of the buffer reagent are overlapped with ends of the reaction reagents in the front and back of the substrate, respectively.

Further, in other embodiments, a thickness of the liquid arranged on the substrate is less than 200 microns.

Further, in other embodiments, the liquid transfer method may further include the following step:
A liquid is disposed on the sample carrier. The liquid is used for the above liquid transfer between the substrate and the sample carrier. The method of arranging the liquid is coating or spraying.

### Embodiment 10

Embodiment 10 provides a biochemical substance analyzing method. The biochemical substance analyzing method may be implemented by adopting the biochemical substance reaction device in the above embodiments. Referring to FIG. 27, the biochemical substance analyzing method includes:
Step 2701, a substrate is controlled to move towards a direction at which a reaction platform is located. The reaction platform includes a sample carrier carrying samples.
Step 2702, the substrate is controlled to pass through the reaction platform. A liquid is transferred between the moving substrate and the sample carrier. The liquid transfer refers to a transfer of the liquid on the substrate to the sample carrier and/or another transfer of the liquid on the sample carrier to the substrate.
Step 2703, a sample after a reaction is detected when the reaction of the sample on the sample carrier with the liquid is completed.

Further, in other embodiments, the liquid transfer method may further include the following step:
A liquid is disposed on the substrate. The liquid is used for the above liquid transfer between the substrate and the sample carrier. The method of arranging the liquid is coating, printing, or spraying.

Further, in other embodiments, the arrangement of liquid on the substrate includes the arrangement of multiple liquids on the substrate according to a preset time sequence. Multiple liquids are connected end to end. Specifically, the multiple liquids include a buffer reagent and two or more reaction reagents. The two reaction reagents distributed in the front and the back of the substrate are connected by the buffer reagent. Or, further, the head and tail ends of the buffer reagent are overlapped with the ends of the front and rear reaction reagents, respectively.

Further, in other embodiments, the thickness of the liquid arranged on the substrate is less than 200 microns.

Further, in other embodiments, the liquid transfer method may further include the following step:
A liquid is disposed on the sample carrier. The liquid is used for the above liquid transfer between the substrate and the sample carrier. The method of arranging the liquid is coating or spraying.

Further, in other embodiments, the step 2703 further includes:
The sample carrier is transferred to a detection device. The detection device detects the sample after the reaction.

For the beneficial effects of the above embodiments, please refer to the illustration of the beneficial effects in Embodiment 1, which will not be repeated redundantly herein.

Even though information and advantages of the present embodiments have been set forth in the foregoing description, together with details of the structures and functions of the present embodiments, the disclosure is illustrative only. Changes may be made in detail, especially in matters of shape, size, and arrangement of parts within the principles of the present exemplary embodiments, to the full extent indicated by the plain meaning of the terms in which the appended claims are expressed.

## Claims

1. A biochemical substance reaction device (8), comprising a liquid transfer device (1, 2, 5, 6, 7, 81) and a reaction platform (3), wherein the reaction platform (3) comprises a sample carrier (32) for loading a sample, the liquid transfer device (1, 2, 5, 6, 7, 81) is configured for a liquid transfer with the sample carrier (32) of the reaction platform (3), the sample carrier (32) is configured to realize a biochemical reaction of the sample and a liquid, and the liquid transfer device (1, 2, 5, 6, 7, 81) comprises:
a substrate (11, 21, 51, 61, 71);
a liquid arrangement device (13, 23, 63, 73), wherein the liquid arrangement device (13, 23, 63, 73) is configured to dispose the liquid on the substrate (11, 21, 51, 61, 71), or, the liquid arrangement device (13, 23, 63, 73) is configured to dispose a plurality of liquids on the substrate (11, 21, 51, 61, 71) according to a preset time sequence;
a driving device (14, 54, 64, 74) comprising a winding device (141) and an unwinding device (143) which are spaced apart, wherein two ends of the substrate (11, 21, 51, 61, 71) are respectively wound on the winding device (141) and the unwinding device (143), and the winding device (141) is configured for rotating so as to pull the substrate (11, 21, 51, 61, 71) to move at a certain speed; and
a control device (17, 57, 67, 6312, 77), wherein the control device (17, 57, 67, 6312, 77) is configured to control the driving device (14, 54, 64, 74) to drive the substrate (11, 21, 51, 61, 71) to move towards the reaction platform (3),
**characterized in that**
the control device (17, 57, 67, 6312, 77) is configured to control the driving device (14, 54, 64, 74) to drive the substrate (11, 21, 51, 61, 71) to pass over the sample carrier (32) for transferring the liquid with the sample carrier (32) during continuous movement of the substrate (11, 21, 51, 61, 71) relative to the sample carrier (32), **in that**
the liquid transfer refers to a transfer of the liquid carried by the substrate (11, 21, 51, 61, 71) to the sample carrier (32) and another transfer of the liquid on the sample carrier (32) to the substrate (11, 21, 51, 61, 71), and **in that**
a spacing between the substrate (11, 21, 51, 61, 71) and the sample carrier (32) is greater than zero but less than a sum of a thickness of a liquid on the substrate (11, 21, 51, 61, 71) and a thickness of the liquid on the reaction platform (3).

2. The biochemical substance reaction device (8) of claim 1, **characterized in that**, the liquid arrangement device (13) comprises a liquid outlet mechanism, a fluid power module, a valve device (133), and a liquid storage device (132), wherein the fluid power module and the valve device (133) are configured to be controlled by the control device (17, 57, 67, 6312, 77) to control the liquid to flow out from the liquid storage device (132) and then to be disposed on the substrate (11, 21, 51, 61, 71) through the liquid outlet mechanism; or, the liquid arrangement device (63) is a printing device (631), and the printing device (631) disposes the liquid on the substrate (11, 21, 51, 61, 71) by means of printing; or, the liquid arrangement device (73) is an anilox roller (731) or a screen printing device.

3. The biochemical substance reaction device (8) of claim 1, **characterized in that**, when the liquid arrangement device (13, 23, 63, 73) disposes the plurality of liquids on the substrate (11, 21, 51, 61, 71), the plurality of liquids is connected front-to-back on the substrate (11, 21, 51, 61, 71); or, the plurality of liquids comprises plurality of reaction reagents and a buffer reagent, two of the plurality of reaction reagents distributed in a front and a back of the substrate are connected by the buffer reagent; or, a head end and a tail end of the buffer reagent are overlapped with ends of the two of the plurality of reaction reagents, respectively.

4. The biochemical substance reaction device (8) of claim 1, **characterized in that**, the substrate (11, 21, 51, 61, 71) is made of a transparent material, hydrophilicity/hydrophobicity and lipophilicity/lipophobicity of the substrate (11, 21, 51, 61, 71) are adapted to properties of the liquid.

5. The biochemical substance reaction device (8) of claim 1, **characterized in that**, the liquid transfer device (1, 2, 5, 6, 7, 81) further comprises an adsorption device (180, 182), wherein the adsorption device (180, 182) is disposed on a side of the substrate (11, 21, 51, 61, 71) away from the reaction platform (3), and the adsorption device (180, 182) is configured to adsorb the substrate (11, 21, 51, 61, 71) to prevent the substrate (11, 21, 51, 61, 71) from bending and contacting with the sample carrier (32), the adsorption device is an object plane (180) coated with a liquid layer, a surface, in contact with the substrate (11, 21, 51, 61, 71), of the object plane (180) is coated with the liquid layer and is in parallel with a movement direction of the substrate (11, 21, 51, 61, 71), the object plane (180) adsorbs the substrate (11, 21, 51, 61, 71) through the liquid layer; or, the adsorption device is a vacuum adsorption device (182), and a surface, in contact with the substrate (11, 21, 51, 61, 71), of the vacuum adsorption device (182) is in parallel with the movement direction of the substrate (11, 21, 51, 61, 71).

6. The biochemical substance reaction device (8) of claim 1, **characterized in that**, the liquid transfer device (1, 2, 5, 6, 7, 81) further comprises a pushing device (183) disposed on a side of the substrate (11, 21, 51, 61, 71) away from the reaction platform (3), wherein the pushing device (183) is configured to push the substrate (11, 21, 51, 61, 71) to form a sealing effect between the substrate (11, 21, 51, 61, 71) and the reaction platform (3) to prevent the liquid from evaporation; the control device (17, 57, 67, 6312, 77) is further configured to determine whether to activate the pushing device (183) to push the substrate (11, 21, 51, 61, 71) according to a temperature required by the liquid participating in a reaction on the sample carrier (32).

7. The biochemical substance reaction device (8) of claim 1, **characterized in that**, the liquid transfer device (1, 2, 5, 6, 7, 81) further comprises a flattening device (187) disposed at a front end of a movement path of the substrate (11, 21, 51, 61, 71), wherein the flattening device (187) is configured to flatten the liquid after the liquid is arranged on the substrate (11, 21, 51, 61, 71) and before the liquid is transferred to the sample carrier (32).

8. The biochemical substance reaction device (8) of claim 1, **characterized in that**, the liquid transfer device (1, 2, 5, 6, 7, 81) comprises multiple substrates (11, 21, 51, 61, 71), the multiple substrates (11, 21, 51, 61, 71) shares the liquid arrangement device (13, 23, 63, 73), the liquid arrangement device (13) comprises a liquid outlet mechanism, and the liquid outlet mechanism is controlled by the control device (17, 57, 67, 6312, 77) to move along a guide rail (232) to disposed the liquid to the multiple substrates (11, 21, 51, 61, 71).

9. A liquid transfer method for a liquid transfer, **characterized in that**, the method comprises:
a control device (17, 57, 67, 6312, 77) controlling a driving device (14, 54, 64, 74) to drive a substrate (11, 21, 51, 61, 71) to move towards a direction at which a liquid arrangement device (13, 23, 63, 73) is located, wherein the driving device (14, 54, 64, 74) comprises a winding device (141) and an unwinding device (143) which are spaced apart, two ends of the substrate (11, 21, 51, 61, 71) are respectively wound on the winding device (141) and the unwinding device (143), and the winding device (141) is configured for rotating so as to pull the substrate (11, 21, 51, 61, 71) to move at a certain speed;
the control device (17, 57, 67, 6312, 77) controlling the liquid arrangement device (13, 23, 63, 73) to dispose a liquid on the substrate (11, 21, 51, 61, 71); or, dispose a plurality of liquids on the substrate (11, 21, 51, 61, 71) according to a preset time sequence;
the control device (17, 57, 67, 6312, 77) controlling the driving device (14, 54, 64, 74) to drive the substrate (11, 21, 51, 61, 71) to move towards a direction at which a reaction platform (3) is located, wherein the reaction platform (3) comprises a sample carrier (32) for loading a sample; and
the control device (17, 57, 67, 6312, 77) controlling the driving device (14, 54, 64, 74) to drive the substrate (11, 21, 51, 61, 71) to pass over the sample carrier (32) for transferring the liquid with the sample carrier (32) during continuous movement of the substrate (11, 21, 51, 61, 71) relative to the sample carrier (32), **in that**
the liquid transfer refers to a transfer of the liquid on the substrate (11, 21, 51, 61, 71) to the sample carrier (32) and another transfer of the liquid on the sample carrier (32) to the substrate (11, 21, 51, 61, 71), and **in that**
a spacing between the substrate (11, 21, 51, 61, 71) and the sample carrier (32) is greater than zero but less than a sum of a thickness of a liquid on the substrate (11, 21, 51, 61, 71) and a thickness of the liquid on the reaction platform (3).

10. The liquid transfer method of claim 9, **characterized in that**, the plurality of liquids is connected end to end; or the plurality of liquids comprises a buffer reagent and the plurality of reaction reagents, wherein two of the two reaction reagents distributed in a front and a back of the substrate (11, 21, 51, 61, 71) are connected by the buffer reagent; or, a head end and tail end of the buffer reagent are overlapped with ends of the two of the plurality of reaction reagents, respectively.

11. The liquid transfer method of claim 9, **characterized in that**, the method further comprises:
disposing the liquid on the sample carrier (32), wherein the liquid is configured for the liquid transfer between the substrate (11, 21, 51, 61, 71) and the sample carrier (32).

## Patentansprüche

1. Eine Reaktionsvorrichtung für biochemische Stoffe (8), umfassend eine Flüssigkeitsübertragungsvorrichtung (1, 2, 5, 6, 7, 81) und eine Reaktionsplattform (3), wobei die Reaktionsplattform (3) einen Probenträger (32) zum Laden einer Probe umfasst, wobei die Flüssigkeitsübertragungsvorrichtung (1, 2, 5, 6, 7, 81) für eine Flüssigkeitsübertragung mit dem Probenträger (32) der Reaktionsplattform (3) konfiguriert ist, der Probenträger (32) konfiguriert ist, um eine biochemische Reaktion der Probe und einer Flüssigkeit zu realisieren, und die Flüssigkeitsübertragungsvorrichtung (1, 2, 5, 6, 7, 81) Folgendes umfasst:
ein Substrat (11, 21, 51, 61, 71);
eine Flüssigkeitsanordnungsvorrichtung (13, 23, 63, 73), wobei die Flüssigkeitsanordnungsvorrichtung (13, 23, 63, 73) konfiguriert ist, um die Flüssigkeit auf dem Substrat (11, 21, 51, 61, 71) anzuordnen, oder die Flüssigkeitsanordnungsvorrichtung (13, 23, 63, 73) konfiguriert ist, um eine Vielzahl von Flüssigkeiten auf dem Substrat (11, 21, 51, 61, 71) gemäß einer voreingestellten zeitlichen Abfolge anzuordnen;
eine Antriebsvorrichtung (14, 54, 64, 74), die eine Aufwickelvorrichtung (141) und eine Abwickelvorrichtung (143) umfasst, die voneinander beabstandet sind, wobei zwei Enden des Substrats (11, 21, 51, 61, 71) jeweils auf die Aufwickelvorrichtung (141) und die Abwickelvorrichtung (143) gewickelt sind, und die Aufwickelvorrichtung (141) zum Drehen konfiguriert ist, um das Substrat (11, 21, 51, 61, 71) so zu ziehen, dass es sich mit einer bestimmten Geschwindigkeit bewegt; und
eine Steuervorrichtung (17, 57, 67, 6312, 77), wobei die Steuervorrichtung (17, 57, 67, 6312, 77) konfiguriert ist, um die Antriebsvorrichtung (14, 54, 64, 74) so zu steuern, dass sie das Substrat (11, 21, 51, 61, 71) antreibt, um sich in Richtung der Reaktionsplattform (3) zu bewegen,
**dadurch gekennzeichnet, dass**
die Steuervorrichtung (17, 57, 67, 6312, 77) konfiguriert ist, um die Antriebsvorrichtung (14, 54, 64, 74) so zu steuern, dass sie das Substrat (11, 21, 51, 61, 71) antreibt, um über den Probenträger (32) zu laufen, um die Flüssigkeit mit dem Probenträger (32) während einer kontinuierlichen Bewegung des Substrats (11, 21, 51, 61, 71) relativ zum Probenträger (32) zu übertragen, dass sich die Flüssigkeitsübertragung auf eine Übertragung der von dem Substrat (11, 21, 51, 61, 71) getragenen Flüssigkeit auf den Probenträger (32) und eine weitere Übertragung der Flüssigkeit auf dem Probenträger (32) auf das Substrat (11, 21, 51, 61, 71) bezieht, und dass
ein Abstand zwischen dem Substrat (11, 21, 51, 61, 71) und dem Probenträger (32) größer als null, aber kleiner als eine Summe aus einer Dicke einer Flüssigkeit auf dem Substrat (11, 21, 51, 61, 71) und einer Dicke der Flüssigkeit auf der Reaktionsplattform (3) ist.

2. Die Reaktionsvorrichtung für biochemische Stoffe (8) nach Anspruch 1, **dadurch gekennzeichnet, dass** die Flüssigkeitsanordnungsvorrichtung (13) einen Flüssigkeitsauslassmechanismus, ein Fluidleistungsmodul, eine Ventilvorrichtung (133) und eine Flüssigkeitsspeichervorrichtung (132) umfasst, wobei das Fluidleistungsmodul und die Ventilvorrichtung (133) so konfiguriert sind, dass sie von der Steuervorrichtung (17, 57, 67, 6312, 77) gesteuert werden, um die Flüssigkeit so zu steuern, dass sie aus der Flüssigkeitsspeichervorrichtung (132) herausfließt und dann durch den Flüssigkeitsauslassmechanismus auf dem Substrat (11, 21, 51, 61, 71) angeordnet wird; oder die Flüssigkeitsanordnungsvorrichtung (63) eine Druckvorrichtung (631) ist und die Druckvorrichtung (631) die Flüssigkeit mittels Drucken auf dem Substrat (11, 21, 51, 61, 71) anordnet; oder die Flüssigkeitsanordnungsvorrichtung (73) eine Rasterwalze (731) oder eine Siebdruckvorrichtung ist.

3. Die Reaktionsvorrichtung für biochemische Stoffe (8) nach Anspruch 1, **dadurch gekennzeichnet, dass**, wenn die Flüssigkeitsanordnungsvorrichtung (13, 23, 63, 73) die Vielzahl von Flüssigkeiten auf dem Substrat (11, 21, 51, 61, 71) anordnet, die Vielzahl von Flüssigkeiten auf dem Substrat (11, 21, 51, 61, 71) hintereinander verbunden ist; oder die Vielzahl von Flüssigkeiten eine Vielzahl von Reaktionsreagenzien und ein Pufferreagenz umfasst, wobei zwei der Vielzahl von Reaktionsreagenzien, die in einem vorderen und einem hinteren Bereich des Substrats verteilt sind, durch das Pufferreagenz verbunden sind; oder ein Kopfende und ein hinteres Ende des Pufferreagenz jeweils mit Enden der zwei der Vielzahl von Reaktionsreagenzien überlappen.

4. Die Reaktionsvorrichtung für biochemische Stoffe (8) nach Anspruch 1, **dadurch gekennzeichnet, dass** das Substrat (11, 21, 51, 61, 71) aus einem transparenten Material hergestellt ist, wobei die Hydrophilie/Hydrophobie und Lipophilie/Lipophobie des Substrats (11, 21, 51, 61, 71) an die Eigenschaften der Flüssigkeit angepasst sind.

5. Die Reaktionsvorrichtung für biochemische Stoffe (8) nach Anspruch 1, **dadurch gekennzeichnet, dass** die Flüssigkeitsübertragungsvorrichtung (1, 2, 5, 6, 7, 81) ferner eine Adsorptionsvorrichtung (180, 182) umfasst, wobei die Adsorptionsvorrichtung (180, 182) auf einer von der Reaktionsplattform (3) abgewandten Seite des Substrats (11, 21, 51, 61, 71) angeordnet ist und die Adsorptionsvorrichtung (180, 182) konfiguriert ist, um das Substrat (11, 21, 51, 61, 71) zu adsorbieren, um zu verhindern, dass sich das Substrat (11, 21, 51, 61, 71) biegt und mit dem Probenträger (32) in Kontakt kommt, wobei die Adsorptionsvorrichtung eine mit einer Flüssigkeitsschicht beschichtete Objektebene (180) ist, wobei eine mit dem Substrat (11, 21, 51, 61, 71) in Kontakt stehende Oberfläche der Objektebene (180) mit der Flüssigkeitsschicht beschichtet ist und parallel zu einer Bewegungsrichtung des Substrats (11, 21, 51, 61, 71) verläuft, wobei die Objektebene (180) das Substrat (11, 21, 51, 61, 71) durch die Flüssigkeitsschicht adsorbiert; oder die Adsorptionsvorrichtung eine Vakuumadsorptionsvorrichtung (182) ist und eine mit dem Substrat (11, 21, 51, 61, 71) in Kontakt stehende Oberfläche der Vakuumadsorptionsvorrichtung (182) parallel zur Bewegungsrichtung des Substrats (11, 21, 51, 61, 71) verläuft.

6. Die Reaktionsvorrichtung für biochemische Stoffe (8) nach Anspruch 1, **dadurch gekennzeichnet, dass** die Flüssigkeitsübertragungsvorrichtung (1, 2, 5, 6, 7, 81) ferner eine Schiebevorrichtung (183) umfasst, die auf einer von der Reaktionsplattform (3) abgewandten Seite des Substrats (11, 21, 51, 61, 71) angeordnet ist, wobei die Schiebevorrichtung (183) konfiguriert ist, um das Substrat (11, 21, 51, 61, 71) zu schieben, um eine Dichtwirkung zwischen dem Substrat (11, 21, 51, 61, 71) und der Reaktionsplattform (3) zu bilden, um die Flüssigkeit vor Verdunstung zu bewahren; die Steuervorrichtung (17, 57, 67, 6312, 77) ist ferner konfiguriert, um zu bestimmen, ob die Schiebevorrichtung (183) aktiviert werden soll, um das Substrat (11, 21, 51, 61, 71) gemäß einer Temperatur zu schieben, die von der an einer Reaktion auf dem Probenträger (32) teilnehmenden Flüssigkeit benötigt wird.

7. Die Reaktionsvorrichtung für biochemische Stoffe (8) nach Anspruch 1, **dadurch gekennzeichnet, dass** die Flüssigkeitsübertragungsvorrichtung (1, 2, 5, 6, 7, 81) ferner eine Glättungsvorrichtung (187) umfasst, die an einem vorderen Ende eines Bewegungspfades des Substrats (11, 21, 51, 61, 71) angeordnet ist, wobei die Glättungsvorrichtung (187) konfiguriert ist, um die Flüssigkeit zu glätten, nachdem die Flüssigkeit auf dem Substrat (11, 21, 51, 61, 71) angeordnet wurde und bevor die Flüssigkeit auf den Probenträger (32) übertragen wird.

8. Die Reaktionsvorrichtung für biochemische Stoffe (8) nach Anspruch 1, **dadurch gekennzeichnet, dass** die Flüssigkeitsübertragungsvorrichtung (1, 2, 5, 6, 7, 81) mehrere Substrate (11, 21, 51, 61, 71) umfasst, wobei die mehreren Substrate (11, 21, 51, 61, 71) die Flüssigkeitsanordnungsvorrichtung (13, 23, 63, 73) teilen, wobei die Flüssigkeitsanordnungsvorrichtung (13) einen Flüssigkeitsauslassmechanismus umfasst und der Flüssigkeitsauslassmechanismus von der Steuervorrichtung (17, 57, 67, 6312, 77) gesteuert wird, um sich entlang einer Führungsschiene (232) zu bewegen, um die Flüssigkeit auf den mehreren Substraten (11, 21, 51, 61, 71) anzuordnen.

9. Ein Verfahren zur Flüssigkeitsübertragung für eine Flüssigkeitsübertragung, **dadurch gekennzeichnet, dass** das Verfahren Folgendes umfasst:
eine Steuervorrichtung (17, 57, 67, 6312, 77) steuert eine Antriebsvorrichtung (14, 54, 64, 74), um ein Substrat (11, 21, 51, 61, 71) so anzutreiben, dass es sich in eine Richtung bewegt, in der sich eine Flüssigkeitsanordnungsvorrichtung (13, 23, 63, 73) befindet, wobei die Antriebsvorrichtung (14, 54, 64, 74) eine Aufwickelvorrichtung (141) und eine Abwickelvorrichtung (143) umfasst, die voneinander beabstandet sind, wobei zwei Enden des Substrats (11, 21, 51, 61, 71) jeweils auf die Aufwickelvorrichtung (141) und die Abwickelvorrichtung (143) gewickelt sind, und die Aufwickelvorrichtung (141) zum Drehen konfiguriert ist, um das Substrat (11, 21, 51, 61, 71) so zu ziehen, dass es sich mit einer bestimmten Geschwindigkeit bewegt;
die Steuervorrichtung (17, 57, 67, 6312, 77) steuert die Flüssigkeitsanordnungsvorrichtung (13, 23, 63, 73), um eine Flüssigkeit auf dem Substrat (11, 21, 51, 61, 71) anzuordnen; oder eine Vielzahl von Flüssigkeiten auf dem Substrat (11, 21, 51, 61, 71) gemäß einer voreingestellten zeitlichen Abfolge anzuordnen;
die Steuervorrichtung (17, 57, 67, 6312, 77) steuert die Antriebsvorrichtung (14, 54, 64, 74), um das Substrat (11, 21, 51, 61, 71) so anzutreiben, dass es sich in eine Richtung bewegt, in der sich eine Reaktionsplattform (3) befindet, wobei die Reaktionsplattform (3) einen Probenträger (32) zum Laden einer Probe umfasst; und
die Steuervorrichtung (17, 57, 67, 6312, 77) steuert die Antriebsvorrichtung (14, 54, 64, 74), um das Substrat (11, 21, 51, 61, 71) so anzutreiben, dass es über den Probenträger (32) läuft, um die Flüssigkeit mit dem Probenträger (32) während einer kontinuierlichen Bewegung des Substrats (11, 21, 51, 61, 71) relativ zum Probenträger (32) zu übertragen, wobei
sich die Flüssigkeitsübertragung auf eine Übertragung der Flüssigkeit auf dem Substrat (11, 21, 51, 61, 71) auf den Probenträger (32) und eine weitere Übertragung der Flüssigkeit auf dem Probenträger (32) auf das Substrat (11, 21, 51, 61, 71) bezieht, und wobei
ein Abstand zwischen dem Substrat (11, 21, 51, 61, 71) und dem Probenträger (32) größer als null, aber kleiner als eine Summe aus einer Dicke einer Flüssigkeit auf dem Substrat (11, 21, 51, 61, 71) und einer Dicke der Flüssigkeit auf der Reaktionsplattform (3) ist.

10. Das Verfahren zur Flüssigkeitsübertragung nach Anspruch 9, **dadurch gekennzeichnet, dass** die Vielzahl von Flüssigkeiten hintereinander verbunden ist; oder die Vielzahl von Flüssigkeiten ein Pufferreagenz und die Vielzahl von Reaktionsreagenzien umfasst, wobei zwei der beiden Reaktionsreagenzien, die in einem vorderen und einem hinteren Bereich des Substrats (11, 21, 51, 61, 71) verteilt sind, durch das Pufferreagenz verbunden sind; oder ein Kopfende und ein hinteres Ende des Pufferreagenz jeweils mit Enden der zwei der Vielzahl von Reaktionsreagenzien überlappen.

11. Das Verfahren zur Flüssigkeitsübertragung nach Anspruch 9, **dadurch gekennzeichnet, dass** das Verfahren ferner Folgendes umfasst:
ein Anordnen der Flüssigkeit auf dem Probenträger (32), wobei die Flüssigkeit für die Flüssigkeitsübertragung zwischen dem Substrat (11, 21, 51, 61, 71) und dem Probenträger (32) konfiguriert ist.

## Revendications

1. Un dispositif de réaction de substances biochimiques (8), comprenant un dispositif de transfert de liquide (1, 2, 5, 6, 7, 81) et une plateforme de réaction (3), dans lequel la plateforme de réaction (3) comprend un support d'échantillon (32) pour charger un échantillon, le dispositif de transfert de liquide (1, 2, 5, 6, 7, 81) est configuré pour un transfert de liquide avec le support d'échantillon (32) de la plateforme de réaction (3), le support d'échantillon (32) est configuré pour réaliser une réaction biochimique de l'échantillon et d'un liquide, et le dispositif de transfert de liquide (1, 2, 5, 6, 7, 81) comprend:
un substrat (11, 21, 51, 61, 71);
un dispositif d'agencement de liquide (13, 23, 63, 73), dans lequel le dispositif d'agencement de liquide (13, 23, 63, 73) est configuré pour disposer le liquide sur le substrat (11, 21, 51, 61, 71), ou, le dispositif d'agencement de liquide (13, 23, 63, 73) est configuré pour disposer une pluralité de liquides sur le substrat (11, 21, 51, 61, 71) selon une séquence temporelle prédéfinie;
un dispositif d'entraînement (14, 54, 64, 74) comprenant un dispositif d'enroulement (141) et un dispositif de déroulement (143) qui sont espacés, dans lequel deux extrémités du substrat (11, 21, 51, 61, 71) sont respectivement enroulées sur le dispositif d'enroulement (141) et le dispositif de déroulement (143), et le dispositif d'enroulement (141) est configuré pour tourner de manière à tirer le substrat (11, 21, 51, 61, 71) pour qu'il se déplace à une certaine vitesse; et
un dispositif de commande (17, 57, 67, 6312, 77), dans lequel le dispositif de commande (17, 57, 67, 6312, 77) est configuré pour commander le dispositif d'entraînement (14, 54, 64, 74) afin d'entraîner le substrat (11, 21, 51, 61, 71) à se déplacer vers la plateforme de réaction (3),
**caractérisé en ce que**
le dispositif de commande (17, 57, 67, 6312, 77) est configuré pour commander le dispositif d'entraînement (14, 54, 64, 74) afin d'entraîner le substrat (11, 21, 51, 61, 71) à passer au-dessus du support d'échantillon (32) pour transférer le liquide avec le support d'échantillon (32) pendant le mouvement continu du substrat (11, 21, 51, 61, 71) par rapport au support d'échantillon (32), **en ce que** le transfert de liquide se réfère à un transfert du liquide porté par le substrat (11, 21, 51, 61, 71) vers le support d'échantillon (32) et à un autre transfert du liquide sur le support d'échantillon (32) vers le substrat (11, 21, 51, 61, 71), et **en ce que** un espacement entre le substrat (11, 21, 51, 61, 71) et le support d'échantillon (32) est supérieur à zéro mais inférieur à une somme d'une épaisseur d'un liquide sur le substrat (11, 21, 51, 61, 71) et d'une épaisseur du liquide sur la plateforme de réaction (3).

2. Le dispositif de réaction de substances biochimiques (8) selon la revendication 1, **caractérisé en ce que**, le dispositif d'agencement de liquide (13) comprend un mécanisme de sortie de liquide, un module d'énergie fluide, un dispositif de vanne (133), et un dispositif de stockage de liquide (132), dans lequel le module d'énergie fluide et le dispositif de vanne (133) sont configurés pour être commandés par le dispositif de commande (17, 57, 67, 6312, 77) pour commander le liquide afin qu'il s'écoule du dispositif de stockage de liquide (132) et soit ensuite disposé sur le substrat (11, 21, 51, 61, 71) par l'intermédiaire du mécanisme de sortie de liquide; ou, le dispositif d'agencement de liquide (63) est un dispositif d'impression (631), et le dispositif d'impression (631) dispose le liquide sur le substrat (11, 21, 51, 61, 71) au moyen d'une impression; ou, le dispositif d'agencement de liquide (73) est un rouleau anilox (731) ou un dispositif de sérigraphie.

3. Le dispositif de réaction de substances biochimiques (8) selon la revendication 1, **caractérisé en ce que**, lorsque le dispositif d'agencement de liquide (13, 23, 63, 73) dispose la pluralité de liquides sur le substrat (11, 21, 51, 61, 71), la pluralité de liquides est connectée de l'avant vers l'arrière sur le substrat (11, 21, 51, 61, 71); ou, la pluralité de liquides comprend une pluralité de réactifs de réaction et un réactif tampon, deux de la pluralité de réactifs de réaction distribués à un avant et un arrière du substrat sont connectés par le réactif tampon; ou, une extrémité de tête et une extrémité de queue du réactif tampon se chevauchent avec les extrémités des deux de la pluralité de réactifs de réaction, respectivement.

4. Le dispositif de réaction de substances biochimiques (8) selon la revendication 1, **caractérisé en ce que**, le substrat (11, 21, 51, 61, 71) est fait d'un matériau transparent, l'hydrophilie/hydrophobie et la lipophilie/lipophobie du substrat (11, 21, 51, 61, 71) sont adaptées aux propriétés du liquide.

5. Le dispositif de réaction de substances biochimiques (8) selon la revendication 1, **caractérisé en ce que**, le dispositif de transfert de liquide (1, 2, 5, 6, 7, 81) comprend en outre un dispositif d'adsorption (180, 182), dans lequel le dispositif d'adsorption (180, 182) est disposé sur un côté du substrat (11, 21, 51, 61, 71) éloigné de la plateforme de réaction (3), et le dispositif d'adsorption (180, 182) est configuré pour adsorber le substrat (11, 21, 51, 61, 71) afin d'empêcher le substrat (11, 21, 51, 61, 71) de se plier et d'entrer en contact avec le support d'échantillon (32), le dispositif d'adsorption est un plan objet (180) revêtu d'une couche de liquide, une surface, en contact avec le substrat (11, 21, 51, 61, 71), du plan objet (180) est revêtue de la couche de liquide et est parallèle à une direction de mouvement du substrat (11, 21, 51, 61, 71), le plan objet (180) adsorbe le substrat (11, 21, 51, 61, 71) par l'intermédiaire de la couche de liquide; ou, le dispositif d'adsorption est un dispositif d'adsorption sous vide (182), et une surface, en contact avec le substrat (11, 21, 51, 61, 71), du dispositif d'adsorption sous vide (182) est parallèle à la direction de mouvement du substrat (11, 21, 51, 61, 71).

6. Le dispositif de réaction de substances biochimiques (8) selon la revendication 1, **caractérisé en ce que**, le dispositif de transfert de liquide (1, 2, 5, 6, 7, 81) comprend en outre un dispositif de poussée (183) disposé sur un côté du substrat (11, 21, 51, 61, 71) éloigné de la plateforme de réaction (3), dans lequel le dispositif de poussée (183) est configuré pour pousser le substrat (11, 21, 51, 61, 71) afin de former un effet d'étanchéité entre le substrat (11, 21, 51, 61, 71) et la plateforme de réaction (3) pour empêcher l'évaporation du liquide; le dispositif de commande (17, 57, 67, 6312, 77) est en outre configuré pour déterminer s'il faut activer le dispositif de poussée (183) pour pousser le substrat (11, 21, 51, 61, 71) en fonction d'une température requise par le liquide participant à une réaction sur le support d'échantillon (32).

7. Le dispositif de réaction de substances biochimiques (8) selon la revendication 1, **caractérisé en ce que**, le dispositif de transfert de liquide (1, 2, 5, 6, 7, 81) comprend en outre un dispositif d'aplatissement (187) disposé à une extrémité avant d'un trajet de mouvement du substrat (11, 21, 51, 61, 71), dans lequel le dispositif d'aplatissement (187) est configuré pour aplatir le liquide après que le liquide est agencé sur le substrat (11, 21, 51, 61, 71) et avant que le liquide ne soit transféré au support d'échantillon (32).

8. Le dispositif de réaction de substances biochimiques (8) selon la revendication 1, **caractérisé en ce que**, le dispositif de transfert de liquide (1, 2, 5, 6, 7, 81) comprend de multiples substrats (11, 21, 51, 61, 71), les multiples substrats (11, 21, 51, 61, 71) partagent le dispositif d'agencement de liquide (13, 23, 63, 73), le dispositif d'agencement de liquide (13) comprend un mécanisme de sortie de liquide, et le mécanisme de sortie de liquide est commandé par le dispositif de commande (17, 57, 67, 6312, 77) pour se déplacer le long d'un rail de guidage (232) afin de disposer le liquide sur les multiples substrats (11, 21, 51, 61, 71).

9. Un procédé de transfert de liquide pour un transfert de liquide, **caractérisé en ce que** le procédé comprend:
un dispositif de commande (17, 57, 67, 6312, 77) commandant un dispositif d'entraînement (14, 54, 64, 74) pour entraîner un substrat (11, 21, 51, 61, 71) à se déplacer vers une direction où se trouve un dispositif d'agencement de liquide (13, 23, 63, 73), dans lequel le dispositif d'entraînement (14, 54, 64, 74) comprend un dispositif d'enroulement (141) et un dispositif de déroulement (143) qui sont espacés, deux extrémités du substrat (11, 21, 51, 61, 71) sont respectivement enroulées sur le dispositif d'enroulement (141) et le dispositif de déroulement (143), et le dispositif d'enroulement (141) est configuré pour tourner de manière à tirer le substrat (11, 21, 51, 61, 71) pour qu'il se déplace à une certaine vitesse;
le dispositif de commande (17, 57, 67, 6312, 77) commandant le dispositif d'agencement de liquide (13, 23, 63, 73) pour disposer un liquide sur le substrat (11, 21, 51, 61, 71); ou, disposer une pluralité de liquides sur le substrat (11, 21, 51, 61, 71) selon une séquence temporelle prédéfinie;
le dispositif de commande (17, 57, 67, 6312, 77) commandant le dispositif d'entraînement (14, 54, 64, 74) pour entraîner le substrat (11, 21, 51, 61, 71) à se déplacer vers une direction où se trouve une plateforme de réaction (3), dans lequel la plateforme de réaction (3) comprend un support d'échantillon (32) pour charger un échantillon; et
le dispositif de commande (17, 57, 67, 6312, 77) commandant le dispositif d'entraînement (14, 54, 64, 74) pour entraîner le substrat (11, 21, 51, 61, 71) à passer au-dessus du support d'échantillon (32) pour transférer le liquide avec le support d'échantillon (32) pendant le mouvement continu du substrat (11, 21, 51, 61, 71) par rapport au support d'échantillon (32), **en ce que**
le transfert de liquide se réfère à un transfert du liquide sur le substrat (11, 21, 51, 61, 71) vers le support d'échantillon (32) et à un autre transfert du liquide sur le support d'échantillon (32) vers le substrat (11, 21, 51, 61, 71), et **en ce que**
un espacement entre le substrat (11, 21, 51, 61, 71) et le support d'échantillon (32) est supérieur à zéro mais inférieur à une somme d'une épaisseur d'un liquide sur le substrat (11, 21, 51, 61, 71) et d'une épaisseur du liquide sur la plateforme de réaction (3).

10. Le procédé de transfert de liquide selon la revendication 9, **caractérisé en ce que** la pluralité de liquides est connectée bout à bout; ou la pluralité de liquides comprend un réactif tampon et la pluralité de réactifs de réaction, dans lequel deux des deux réactifs de réaction distribués à un avant et un arrière du substrat (11, 21, 51, 61, 71) sont connectés par le réactif tampon; ou, une extrémité de tête et une extrémité de queue du réactif tampon se chevauchent avec les extrémités des deux de la pluralité de réactifs de réaction, respectivement.

11. Le procédé de transfert de liquide selon la revendication 9, **caractérisé en ce que** le procédé comprend en outre:
la disposition du liquide sur le support d'échantillon (32), dans lequel le liquide est configuré pour le transfert de liquide entre le substrat (11, 21, 51, 61, 71) et le support d'échantillon (32).
